# EUROPEAN PATENT APPLICATION

(11) **EP 4 807 704 A1**
(43) Date of publication of application: **16.09.2026**
(21) Application number: 25163946.4
(22) Date of filing: 14.03.2025
(51) Int. Cl.: G07C 9/00, B60R 25/24

(54) **DEVICE, VEHICLE AND METHODS FOR PROVIDING A RESTRICTED DIGITAL KEY**

(71) Applicant: Bayerische Motoren Werke Aktiengesellschaft, 80809 München (DE)
(72) Inventor: Hippler, Marco, 81541 München (DE); Fink, Matthias, 81541 München (DE)

(57) **Abstract**

The present document describes a device (110) holding a device digital key (111) for controlling one or more vehicle functions (103) of a vehicle (100). The device (110) is configured to generate device authentication data for authenticating the device (110) at the vehicle (100) based on the device digital key (111), and to send the device authentication data to the vehicle (100). Furthermore, the device (110) is configured to determine that the vehicle (100) cannot be authenticated at the device (110), and in reaction to determining that the vehicle (100) cannot be authenticated at the device (110), to limit the control to a restricted set of vehicle functions (103).

## Description

The present document is directed at controlling a function of a vehicle using a digital key. In particular, the present document is directed at providing a restricted digital key which is limited to the control of a restricted set of vehicle functions.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

The provision of a digital key is typically associated with a relatively high effort. Furthermore, a digital key can typically only be used by a particular device and for a particular vehicle. The present document is directed at the technical problem of increasing the flexibility of a digital key for controlling one or more vehicle functions in an efficient and secure manner.

The technical problem is solved by each one of the independent claims. Preferred examples are specified in the dependent claims.

According to an aspect a device holding a device digital key for controlling one or more vehicle functions of a vehicle (e.g., a car or a motorcycle) is described. Example devices are a smart device, a smartphone, a smart watch and/or a key card. The device digital key may be a digital key according to the CCC standard (according to the CCC specification CCC-TS-101 release 3 or higher). The vehicle comprises a full set of vehicle functions that can be controlled by an entity (i.e., a device) having a digital key. The full set of vehicle functions may comprise
- one or more vehicle functions for accessing the vehicle, in particular for locking or unlocking a door of the vehicle, and/or for opening or closing a window of the vehicle; and/or
- one or more vehicle functions that relate to a drive operation of the vehicle (such as starting the motor of the vehicle and/or deactivating the immobilizer of the vehicle).

The device is configured to generate device authentication data for authenticating the device at the vehicle based on the device digital key, in particular based on the private key (SK) of the device digital key. As outlined in the present document, the device authentication data may be indicative of and/or may be dependent on
- the vehicle identifier of the vehicle;
- the ephemeral public key of the vehicle (which may have been provided to the device within a AUTH0 command);
- the ephemeral public key of the device (which may be provided to the vehicle within a AUTH0 response); and/or
- an identifier for the transaction between the vehicle and the device.

Furthermore, the device is configured to send the device authentication data to the vehicle over a communication link (e.g., a BLE and/or an NFC communication link) between the device and the vehicle. The device authentication data may then be used by the vehicle to authenticate the device at the vehicle.

The device is further configured to determine that the vehicle cannot be authenticated at the device.

The device may be configured to receive the vehicle identifier from the vehicle (e.g., within the SELECT command and/or within the AUTH0 command) over the communication link. Furthermore, the device may be configured to detect that the device does not have access to the public key (PK) of the vehicle digital key of the vehicle that is identified by the vehicle identifier. The vehicle digital key may be a digital key according to the (above-mentioned) CCC standard. It may be determined based on detecting that the device does not have access to the public key of the vehicle digital key of the vehicle that the vehicle cannot be authenticated at the device.

Alternatively, or in addition, the device may be configured to receive vehicle authentication data from the vehicle over the communication link (e.g., within an AUTH1 command). The vehicle authentication data comprises a digital signature that has been generated using the vehicle digital key of the vehicle, notably the private key of the vehicle digital key of the vehicle. The device may be configured to determine that the digital signature cannot be verified, and it may be determined based on determining that the digital signature cannot be verified that the vehicle cannot be authenticated at the device.

Alternatively, or in addition, the device may be configured to receive vehicle authentication data from the vehicle, which does not comprise a digital signature that has been generated by the vehicle. In particular, the AUTH1 command may not comprise the digital signature, e.g., the AUTH1 command may be empty. It may then be determined based on the fact that the vehicle authentication data does not comprise a digital signature that the vehicle cannot be authenticated at the device.

Furthermore, the device is configured, in reaction to determining that the vehicle cannot be authenticated at the device, to limit the control to a restricted set of vehicle functions. In other words, it may be ensured that the device (with the device digital key) can only be used for controlling a restricted set of vehicle functions. Alternatively, or in addition, it may be ensured that the device (with the device digital key) cannot be used for controlling any vehicle functions (from the full set of vehicle functions) which are not part of the restricted set of vehicle functions.

The restricted set of vehicle functions may comprise at least one vehicle function from the full set of vehicle functions. Furthermore, the restricted set of vehicle functions may be a real subset of the full set of vehicle functions (such that the restricted set of vehicle functions comprises less vehicle functions that the full set of vehicle functions).

In particular, the restricted set of vehicle functions may comprise one or more vehicle functions for accessing the vehicle, in particular for locking or unlocking a door of the vehicle, and/or for opening or closing a window of the vehicle. On the other hand, the restricted set of vehicle functions preferably does not comprise any vehicle function that relates to the drive operation of the vehicle. In particular, the restricted set of vehicle functions may be limited to one or more access functions for accessing the vehicle.

Hence, a one-sided authentication process may be used to provide an efficient and flexible use of a digital key for controlling a restricted set of vehicle functions, notably for providing an access-only control.

The device may be configured to inform the vehicle about the fact that the vehicle cannot be authenticated at the device, and/or about the fact that the control is limited to a restricted set of vehicle functions. As a result of this, the restriction of the set of controllable vehicle functions may be implemented in a particularly reliable and secure manner.

The device may comprise private data and confidential data (which is stored on one or more storage areas of the device). The private data may be stored in a private mailbox and the confidential data may be stored in a confidential mailbox. The private data may comprise the key attestation of the device digital key. The confidential data may comprise an immobilizer token for a vehicle function that relates to a drive operation of the vehicle.

Hence, the device may comprise a private mailbox and a confidential mailbox, which are configured to store information that relates to the device digital key and/or to the control of one or more vehicle functions of the vehicle. The device may be configured to store the key attestation for the device digital key in the private mailbox and/or to store an immobilizer token in the confidential mailbox, wherein the immobilizer token may be required for a vehicle function that relates to a drive operation of the vehicle.

The device may be configured, in reaction to determining that the vehicle cannot be authenticated at the device deny access of the vehicle to the confidential data and/or to prevent the vehicle from modifying the private data. Alternatively, or in addition, the device may be configured, in reaction to determining that the vehicle cannot be authenticated at the device, to deny access of the vehicle to information stored in the confidential mailbox. As a result of this, the control of a vehicle function that relates to a drive operation of the vehicle can be prevented in a particularly reliable and secure manner.

Alternatively, or in addition, the device may be configured, in reaction to determining that the vehicle cannot be authenticated at the device, to prevent the vehicle from writing information to the private mailbox and/or to the confidential mailbox. As a result of this, the reliability and the security of the digital key-based control may be increased.

The device may be configured, in reaction to determining that the vehicle cannot be authenticated at the device, to request the user of the device to authorize the authentication of the device at the vehicle (e.g., via the user interface of the device). Furthermore, the device may be configured to send the device authentication data to the vehicle, if, notably only if, the user of the device authorizes the authentication of the device at the vehicle. Alternatively, or in addition, the device may be configured to prevent the device authentication data from being sent to the vehicle, if the user of the device does not authorize the authentication of the device at the vehicle. As a result of this, the safety of the one-sided authentication process may be increased further.

According to a further aspect, a vehicle comprising a full set of vehicle functions that can be controlled (e.g., remotely) by an entity using a digital key is described. The vehicle is configured to establish a communication link with a device holding a device digital key for controlling one or more vehicle functions of the vehicle.

Furthermore, the vehicle is configured to determine that the vehicle cannot be authenticated at the device. The vehicle may be configured to detect that a digital signature using the vehicle digital key, notably the private key (SK) of the vehicle digital key, cannot be generated (e.g., due to a defective component of the vehicle). It may be determined based on detecting that a digital signature cannot be generated that the vehicle cannot be authenticated at the device.

Alternatively, or in addition, the vehicle may be configured to receive a message from the device (e.g., a SELECT response message and/or a AUTH0 response message), wherein the message is indicative of the fact that the device does not have access to the public key (PK) of the vehicle digital key of the vehicle. It may be determined based on the received message that the vehicle cannot be authenticated at the device.

The vehicle is further configured, in reaction to determining that the vehicle cannot be authenticated at the device, to perform a one-sided authentication process during which
- the device is authenticated at the vehicle using the device digital key, and
- the vehicle is not authenticated at the device.

Furthermore, the vehicle is configured, in reaction to performing the one-sided authentication process, to limit control by the device to the restricted set of vehicle functions.

According to a further aspect, a method for controlling one or more vehicle functions of a vehicle using a device digital key of a device is described, wherein the vehicle comprises a full set of vehicle functions that can be controlled by an entity having a digital key. The method comprises generating device authentication data for authenticating the device at the vehicle based on the device digital key, in particular based on the private key of the device digital key. Furthermore, the method comprises sending the device authentication data to the vehicle over a communication link between the device and the vehicle.

**In** addition, the method comprises determining that the vehicle cannot be authenticated at the device; and in reaction to determining that the vehicle cannot be authenticated at the device, limiting the control to a restricted set of vehicle functions. The restricted set of vehicle functions may comprise at least one vehicle function from the full set of vehicle functions. Furthermore, the restricted set of vehicle functions may be a real subset of the full set of vehicle functions.

According to another aspect, a method for enabling control of one or more vehicle functions of vehicle is described, wherein the vehicle comprises a full set of vehicle functions that can be controlled (e.g., remotely) by an entity using a digital key. The method comprises establishing a communication link with a device holding a device digital key for controlling one or more vehicle functions of the vehicle. Furthermore, the method comprises determining that the vehicle cannot be authenticated at the device.

The method further comprises, in reaction to determining that the vehicle cannot be authenticated at the device, performing a one-sided authentication process during which the device is authenticated at the vehicle using the device digital key, and during which the vehicle is not authenticated at the device. In addition, the method comprises, in reaction to performing the one-sided authentication process, limiting control by the device to a restricted set of vehicle functions.

According to a further aspect, a software program is described. The software program may be adapted for execution on a processor and for performing the method steps of one or more of the methods outlined in the present document when carried out on the processor.

According to another aspect, a storage medium is described. The storage medium may comprise a software program adapted for execution on a processor and for performing the method steps of one or more of the methods outlined in the present document when carried out on the processor.

According to a further aspect, a computer program product is described. The computer program may comprise executable instructions for performing the method steps of one or more of the methods outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device;
Fig. 2 shows an example process for performing a one-sided authentication;
Fig. 3a shows a flow chart of an example method for enabling the control of one or more vehicle functions; and
Fig. 3b shows a flow chart of another example method for enabling the control of one or more vehicle functions.

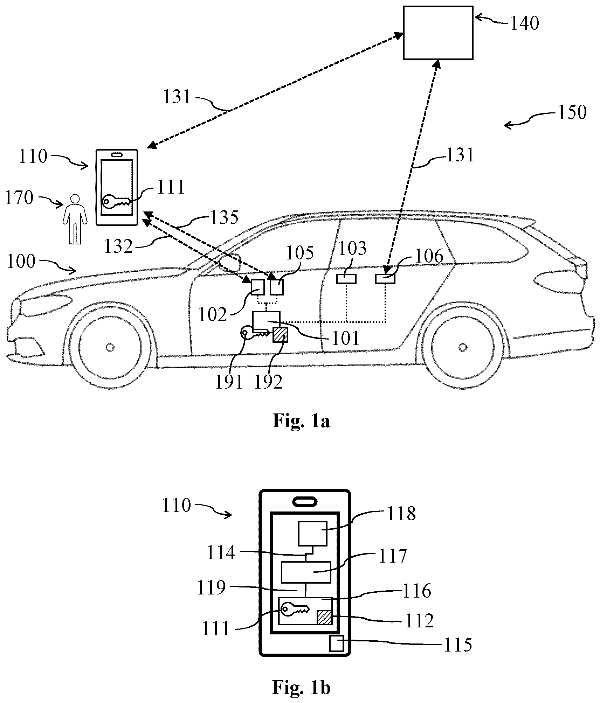

As outlined above, the present document is directed at the technical problem of providing a digital key for controlling a restricted set of functions of a vehicle in an efficient, flexible and/or secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), a key card, etc., wherein a digital key 111 is stored on the portable electronic device, notably on a protected memory section (e.g., a secure element) of the portable electronic device. the digital key 111 of the device 110 may be referred to as the device digital key. The device 110 may comprise an integrated power supply, such as a battery, in order to allow the device 110 to be operated in an autonomous manner.

The digital key device 110 may communicate with a communication unit 102, 105 of the vehicle 100 via one or more different wireless communication links 132, 135. Different communication links 132, 135 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 135 may be used to provide a short-range communication between the device 110 and the vehicle 100. For establishing the NFC communication link 135, the device 110 may be held in close proximity (e.g., in a distance of less than 10cm) from the communication unit 105 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subject to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 132, 135.

In an example system 150, a BLE communication link 132 may be established between the device 110 and the vehicle 100, once the distance between the device 110 and the vehicle 100 is equal to or less than a certain distance threshold. Once the BLE communication link 132 has been established, the device 110 may be authenticated with the vehicle 100 using the digital key 111 of the device 110. Subject to authentication of the device 110, the device 110 may be enabled to send one or more control commands via the communication link 132 for controlling one or more vehicle functions 103.

The system 150 may comprise a vehicle-server 140 which may e.g., be managed by a manufacturer of the vehicle 100. The device 110 and/or a communication unit 106 of the vehicle 100 may be configured to communicate with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 and/or a key attestation 112 for the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the DK applet of the storage area 116, via a (secure) data interface 119. The operating system 117 may execute a software application 118, e.g., a software application 118 which is configured to interact with the vehicle server 140. The operating system 117 may be configured to transfer data between the software application 118 and the operating system 117 via a data interface 114. Furthermore, the device 110 may comprise a communication module 115, notably an NFC communication module and/or a BLE communication module, for establishing an NFC communication link 135 with the vehicle 100.

The digital key-based interaction between a device 110 and a vehicle 100 typically requires both the device 110 and the vehicle 100 to hold a digital key. As shown in Fig. 1a, the device 110 holds a device digital key 111 (with a key attestation 112). Furthermore, the vehicle 100 hold a vehicle digital key 191 (with a key attestation 192).

The vehicle 100 may be configured to create a key pair (according to the CCC standard) with a PK (public key) and an SK (private key). The key pair may correspond to the digital key 191 of the vehicle 100. The PK of the vehicle digital key 191 may be provided to the vehicle server 140. The vehicle server 140 may be configured to generate a key attestation 192 for the vehicle digital key 191, wherein the key attestation 192 may comprise
- the vehicle identifier of the vehicle 100; and/or
- the (possibly compressed) PK of the vehicle digital key 191.

The key attestation 192 may be sent to the vehicle 100. Furthermore, the vehicle 100 may store the key attestation 192 (for the vehicle digital key 191) in a persistent manner.

In order to enable the device 110 to interact with a vehicle 100, an endpoint may be generated on the device 110, wherein the endpoint comprises a device digital key 111 (with an SK and a PK). For this purpose, the vehicle server 140 may send a create endpoint command to the device 110, wherein the command comprises the vehicle identifier of the vehicle 100 and the PK of the digital key 191 of the vehicle 100. The device 110 may then create the endpoint, which involves generating the device digital key 111. The PK of the digital key 111 may be provided to the vehicle server 140.

The vehicle server 140 may cause the device digital key 111 of the device 110 to be tracked by the key tracking server (KTS). Furthermore, the vehicle server 140 may generate the key attestation 112 for the device digital key 111 of the device 110, wherein the key attestation 112 may be signed using the tracking key of the KTS. The key attestation 112 for the device digital key 111 of the device 110 may be provided to the vehicle 100, thereby enabling the vehicle 100 to verify the authenticity of the device 110. The key attestation 112 for the device digital key 111 may comprise a digital signature over data which comprises the PK of the device digital key 111 of the device 110 and/or the vehicle identifier, wherein the digital signature may be generated using the SK of the tracking key of the KTS.

The device 110 is now enabled to interact with the vehicle 100. In the context of the interaction between the device 110 and the vehicle 100, the device 110 and the vehicle 100 may first agree on the DK applet that is to be used for the interaction. For this purpose, the SELECT command may be used, as specified e.g., in chapter 15 of the CCC specification CCC-TS-101 release 3 or higher. The content of the CCC specification, in particular the content of chapter 15 of the CCC specification, is incorporated herein by reference.

The device 110 may inform the vehicle 100 (e.g., using the SELECT command of the SELECT response) that a particular digital key 111 is to be used for interaction, which is entitled for interacting with the vehicle 100.

Subsequent to selecting the DK applet (and the corresponding device digital key 111), the authentication process may be performed. This may be done using the AUTH0 and AUTH1 commands specified in (chapter 15 of) the above-mentioned CCC specification. The vehicle 100 may send the vehicle identifier to the device 110, e.g., using the AUTH0 command. Furthermore, the ephemeral public key (of an ephemeral key pair) of the vehicle 100 may be provided to the device 110. In response to this, the device 110 may provide the ephemeral public key (of an ephemeral key pair) of the device 110 to the vehicle 100 (within the AUTH0 response). The ephemeral keys may be used to derive a shared secret on both sides (i.e., at the vehicle 100 and at the device 110), wherein the shared secret may then be used to generate a shared symmetric key (e.g., using Diffie-Hellman and a pre-determined key derivation function). The shared symmetric key may be used to provide a secure communication channel between the device 110 and the vehicle 100 (wherein the shared symmetric key may be used to encrypt the messages that are exchanged between the device 110 and the vehicle 100).

For the actual authentication, the AUTH1 command of the above-mentioned CCC specification may be used. The vehicle 100 may generate a digital signature using the private key (SK) of the vehicle digital key 191. The digital signature may be generated across
- the vehicle identifier;
- the transaction identifier (for the particular transaction between the device 110 and the vehicle 100);
- the ephemeral public key of the vehicle 100; and/or
- the ephemeral public key of the device 110.

The digital signature may be part of vehicle authentication data. The vehicle authentication data, notably the digital signature, of the vehicle 100 may be sent to the device 110 via the secure communication channel (using the AUTH1 command). The device 110 may verify the digital signature of the vehicle 100 using the public key of the vehicle digital key 191, wherein the public key of the vehicle digital key 191 is indicated by the key attestation 192 for the vehicle digital key 191.

Furthermore, the device 110 may generate a digital signature using the private key of the digital key 111 (wherein the digital signature may be part of device authentication data). The digital signature may be generated across
- the vehicle identifier;
- the ephemeral public key of the vehicle 100;
- the ephemeral public key of the device 110; and/or
- the identifier for the transaction between the vehicle 100 and the device 110.

The device authentication data, notably the digital signature, of the device 110 may be sent to the vehicle 100 via the secure communication channel (e.g., within the AUTH1 response). The vehicle 100 may verify the digital signature of the device 110 using the public key of the digital key 111 of the device 110.

As a result of this process, the authentication of the vehicle 100 and the device 110 has been completed. The device 110 may then be used to control one or more vehicle functions 103 of the vehicle 100. In order to enable a start of the engine of the vehicle 100, the vehicle 100 may request the device 110 to provide the so-called immobilizer token. For this purpose, the EXCHANGE command of the above-mentioned CCC specification may be used. The immobilizer token may be stored within the storage area 116 of the device 110 (e.g., within the confidential mailbox for the device digital key 111). The device 110 may retrieve the immobilizer token from the storage area 116 and may then provide the immobilizer token to the vehicle 100, thereby enabling the start of the engine of the vehicle 100.

As outlined above, the authentication process for enabling the control of one or more vehicle functions 103 typically requires
- the device 110 to have knowledge regarding the vehicle 100, in particular regarding the PK of the vehicle digital key 191 of the vehicle 100; and
- the vehicle 110 to have knowledge regarding the device 110, in particular regarding the PK of the device digital key 111 of the device 110.

In order to increase the flexibility and the efficiency of the digital key-based control of vehicle functions 103, a simplified authentication process for enabling the control of a limited and/or restricted set of vehicle functions 103 may be used, such as the one or more access functions 103 which allow an access to the vehicle 100 only. The simplified authentication process may only require the vehicle 110 to have knowledge regarding the device 110, in particular regarding the PK of the device digital key 111 of the device 110. On the other hand, it may not be required that the device 110 has knowledge regarding the vehicle 100, notably regarding the PK of the vehicle digital key 191.

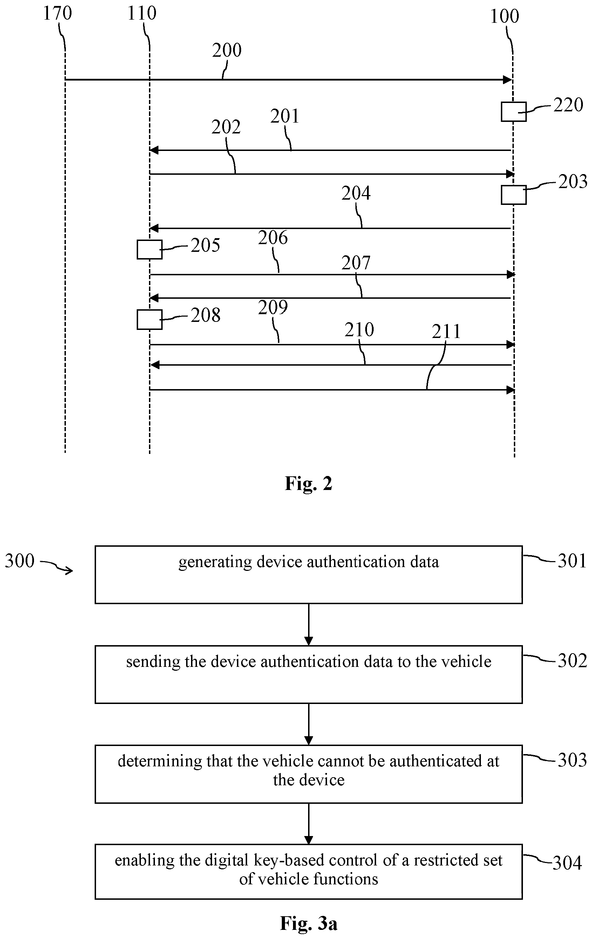

Fig. 2 shows an example authentication process for a one-sided authentication process. The authentication process is initiated by the user 170 of the device 110 by approaching the vehicle 100 (step 200), thereby establishing a communication link 132, 135 between the vehicle 100 and the device 110. Once the communication link 132, 135 is established, the vehicle 100 (that has knowledge about the device digital key 111 of the device 110), may inform the device 110 about the DK applet and/or the device digital key 111 that is to be used for the authentication process (step 201). For this purpose, the SELECT command may be used. The device 110 may confirm usage of the selected DK applet and/or of the selected device digital key 111 (step 202). For this purpose, the SELECT response may be used.

Typically, the message (notably the SELECT command) that is sent from the vehicle 100 to the device 110 comprises information regarding the vehicle 100, such as the vehicle identifier. The device 110 may be configured to detect (based on the information regarding the vehicle 100) that the vehicle 100 is not known to the device 110. In particular, it may be detected that the device 110 has no knowledge regarding the PK of the vehicle digital key 191 of the vehicle 100. The device 110 may then inform the vehicle 100 (e.g., within the message, notably within the SELECT response, sent in step 202) about the fact that the vehicle 100 cannot be authenticated at the device 110 (such that only a one-sided authentication process can be performed and such that the device 110 will only be enabled to control a restricted set of vehicle functions 103). By way of example, the vehicle 100 may be informed that the device digital key 111 of the device 110 is an access-only key (which is restricted to controlling one or more access functions 103 of the vehicle 100).

Subsequent to selecting the DK applet (and the corresponding device digital key 111), the authentication process may be performed. As outlined above, this may be done using the AUTH0 and AUTH1 commands specified in (chapter 15 of) the above-mentioned CCC specification. The vehicle 100 may send the vehicle identifier to the device 110, e.g., using the AUTH0 command (step 204). Furthermore, the ephemeral public key (of the ephemeral key pair) of the vehicle 100 may be generated by the vehicle 100 (step 203) and may be provided to the device 110 (step 204). In response to this, the device 110 may generate an ephemeral key pair of the device 110 (step 205) and may provide the ephemeral public key (of the ephemeral key pair) of the device 110 to the vehicle 100 (step 207). The ephemeral keys may be used on both sides (i.e., at the vehicle 100 and at the device 110) to derive the shared secret, wherein the shared secret may then be used to generate a shared symmetric key (e.g., using Diffie-Hellman and a pre-determined key derivation function). The shared symmetric key may be used to provide a secure communication channel between the device 110 and the vehicle 100 (wherein the shared symmetric key may be used to encrypt the messages that are exchanged between the device 110 and the vehicle 100).

For the actual authentication, the AUTH1 command and/or AUTH1 response of the above-mentioned CCC specification may be used. If the vehicle 100 is aware of the fact that a one-sided authentication process is performed, the vehicle 100 may send an empty AUTH1 command to the device 110 (step 207).

On the other hand, if the vehicle 100 is not aware of the fact that the device 110 has no knowledge regarding the vehicle digital key 191 of the vehicle 100, the vehicle 100 may generate a digital signature using the private key (SK) of the vehicle digital key 191. The digital signature may be generated across
- the vehicle identifier;
- the transaction identifier (for the particular transaction between the device 110 and the vehicle 100);
- the ephemeral public key of the vehicle 100; and/or
- the ephemeral public key of the device 110.

The digital signature may be part of the vehicle authentication data. The vehicle authentication data, notably the digital signature, of the vehicle 100 may be sent to the device 110 via the secure communication channel (step 207). The vehicle authentication data may be sent within the AUTH1 command.

In view of the fact that the device 110 has no knowledge about the vehicle digital key 191 of the vehicle 100, the device 110 does not and/or cannot verify the digital signature of the vehicle 100.

However, the device 110 generates a digital signature using the private key of the device digital key 111 (step 208). The digital signature may be generated across
- the vehicle identifier;
- the ephemeral public key of the vehicle 100;
- the ephemeral public key of the device 110; and/or
- the identifier for the transaction between the vehicle 100 and the device 110.

The digital signature may be part of the device authentication data. The device authentication data, notably the digital signature, of the device 110 may be sent to the vehicle 100 via the secure communication channel (step 209), e.g., using the AUTH1 response. The vehicle 100 may verify the digital signature of the device 110 using the public key of the device digital key 111 of the device 110.

As a result of this process, the authentication process is completed, wherein the device 110 has been authenticated at the vehicle 100, and the vehicle 100 has not been authenticated at the device 110.

Subsequent to the one-sided authentication process, the device 110 may be used to control a restricted set of one or more vehicle functions 103 of the vehicle 100 only. By way of example, the restricted set of vehicle functions 103 may comprise one or more access functions 103, such as locking or unlocking a door of the vehicle 100. On the other hand, the restricted set of vehicle functions 103 does not comprise a start of the motor of the vehicle 100 and/or a deactivation of the immobilizer of the vehicle 100.

As outlined above, in the context of generating the device digital key 111 at the device 110, an endpoint may have been generated at the device 110 (notably within the storage area 116 of the device 110). The endpoint may comprise at least one mailbox for storing information regarding the device digital key 111, such as the entitlements of the device digital key 111 and/or the attestation 112 of the device digital key 111. In particular, the endpoint may comprise a private mailbox and a confidential mailbox. The private mailbox may comprise the attestation 112 of the device digital key 111. The confidential mailbox may comprise the immobilizer token which is needed for a start of the motor of the vehicle 100 and/or for a deactivation of the immobilizer of the vehicle 100. The device 110 may be configured to limit access of the vehicle 100 to the private mailbox, if only a one-sided authentication process has been performed. In particular, the device 110 may be configured to prevent the vehicle 100 from accessing the confidential mailbox, if only a one-sided authentication process has been performed. By doing this, the control of a vehicle function 103 that relates to a drive operation of the vehicle 100 may be prevented in a reliable manner.

The vehicle 100 may be configured to send an information request (notably an EXCHANGE command) to the device 110 (step 210). The information request may be directed at information from the private mailbox or from the confidential mailbox of the device 110. The device 110 may send an information response (notably an EXCHANGE response) to the vehicle 100 (step 211). The information response may comprise the requested information from the private mailbox. On the other hand, the device 110 may indicate to the vehicle 100 (within the EXCHANGE response) that access to the confidential mailbox has been denied, if information from the confidential mailbox has been requested.

It may occur, e.g., in case of an accident or of a technical defect of the vehicle 100, that the vehicle 100 is not able to generate a digital signature using the SK of the vehicle digital key 191 of the vehicle 100. By way of example, the electronic control unit (ECU) of the vehicle 100 which is responsible for generating the digital signature may be damaged. Hence, the vehicle 100 may be configured to detect that the vehicle 100 cannot authenticate itself at the device (step 220). As a result of this, a degradation from a two-sided authentication process to a one-sided authentication process may be performed (as a fallback mode), in order to enable the device 110 to only control the restricted set of vehicle functions 103 (even though the device 110 has knowledge of the vehicle digital key 191, notably of the PK of the vehicle digital key 191, of the vehicle 100).

Hence, the relation between a device 110 and a vehicle 100 may be loosened for one or more scenarios in such a way that the device 110 does not have or does not need to have knowledge about the vehicle 100 (notably about the PK of the vehicle digital key 191). This simplifies logistics within the generation of digital keys 111 and allows a flexible use of digital keys in different types of devices 110 (e.g., smartphones, smart watches, key cards, digital key fobs, etc.). As a consequence, the device 110 may be used without any re-configuration on various different vehicles 100 and only the vehicles 100 need to be configured, notably to obtain the attestation 112 for the device digital key 111 of the device 110 from the vehicle server 140, in order to gain knowledge about the new device digital key 111.

The one-sided authentication process enables the use of a general access-only key 111 and/or the use of a regular digital key 111 for access only within an emergency situation.

By way of example, a general, permanent access-only key 111 for a private person may be provided with simplified logistics on the vehicle OEM side. The key 111 (e.g., an access-only key card 110) may be sent out directly from a warehouse without reconfiguration. The key 111 may only be registered in the vehicle OEM backend (i.e., at the vehicle server 140) for a particular vehicle 100. As an added protection, the key 111 (i.e., the PK of key 111 and/or the attestation 112 of the key 111) may be pushed to the vehicle 100 in an inactive state, such that (for activating the key 111), the key card 110 may need to be activated with a second factor within the vehicle 100 (e.g., by entering a PIN obtained through a second channel or by another digital key or classic key fob).

In another example, an access-only key 111 may be provided for service personnel, such that one key card 110 may be used for multiple vehicles 100.

The one-sided authentication process may be used for providing vehicle access in an emergency situation, when the ECU of the vehicle 110, which handles the digital key logic, is defective, e.g., due to an accident. In such a case, the vehicle 100 cannot generate any signatures for transactions, as it would require the secret key (notably the SK of the vehicle digital key 191 of the vehicle 100) to be available in the vehicle shell, e.g., in a small ECU in the door of the vehicle 100, which handles (digital key related) NFC communication and the door locking mechanism. However, a secret cannot typically be stored properly and/or effectively in such a location. However non-sensitive digital key related properties may be synched, such as the public keys of the one or more currently active device digital keys 111, which would allow a verification of the digital key signature (of a device 110), in order to grant vehicle access in an emergency situation. In such a scenario, the device 110 is configured to deny any form of access to the confidential mailbox and only grant read access to the private mailbox. Write access to the private mailbox is typically not required, as the vehicle 100 cannot properly process e.g., a key attestation, as the state of the vehicle 100 is either temporary (the processing would not alter the digital key table of the main ECU) or the ECU needs to be replaced which would require a new owner pairing and/or sharing of a key.

In the context of the one-sided authentication process, the device 110 may perform a user authorization procedure, within which the user 170 of the device 110 is requested to authorize the one-sided authentication process. The user authorization procedure may be performed within step 205 of the process described in Fig. 2. The device 110 may be configured to determine that the vehicle 100 cannot be authenticated at the device 110. In reaction to this, the device 110 may initiate the user authorization procedure. In particular, the user 170 may be requested to authorize the one-sided authentication process via the user interface of the device 110. If the user 170 authorizes the one-sided authentication process, the one-sided authentication process may be performed (and the device 110 may provide the public key of its digital key 111 and/or its ephemeral public key to the vehicle 100). On the other hand, the one-sided authentication process may be terminated or prevented. As a result of this, a particularly secure one-sided authentication process may be provided. In particular, it may be ensured that the device 110 does not communicate private data (such as the public key of its digital key 111) to a malicious party (which claims to be a vehicle 100).

Fig. 3a shows a flow chart of an example (possibly computer-implemented) method 300 for controlling one or more vehicle functions 103 of a vehicle 100 using a device digital key 111 of a device 110 (e.g., of a smartphone, of a smart watch, of a key fob or of a key card). The method 300 may be executed by the device 110 or by a processor of the device 110. The vehicle 100 comprises a full set of vehicle functions 103 that can be controlled by an entity having a digital key. The full set of vehicle functions 103 may comprise
- one or more access functions for accessing the vehicle 100, e.g., for unlocking or locking a door of the vehicle 100 and/or for opening or closing a window of the vehicle 100; and/or
- one or more drive functions for causing the vehicle 100 to move, e.g., for starting the motor of the vehicle 100 and/or for deactivating the immobilizer of the vehicle 100.

The method 300 comprises generating 301 device authentication data for authenticating the device 110 at the vehicle 100 based on the device digital key 111, in particular based on the private key of the device digital key 111. The device authentication data may comprise a digital signature, wherein the digital signature may have been generated using the device digital key 111, in particular using the private key of the device digital key 111. The device authentication data may be indicative of and/or the digital signature may be generated across the following data
- the vehicle identifier;
- the ephemeral public key of the vehicle 100;
- the ephemeral public key of the device 110; and/or
- an identifier for the transaction between the vehicle 100 and the device 110.

The method 300 further comprises sending 302 the device authentication data to the vehicle 100 over a communication link 132, 135 between the device 110 and the vehicle 100. The device authentication data may be sent within the AUTH1 response message (as outlined in the present document).

Furthermore, the method 300 comprises determining 303 that the vehicle 100 cannot be authenticated at the device 110. This may be determined based on the fact that,
- the device 110 does not have knowledge of the (PK of the) vehicle digital key 191 of the vehicle 100; and/or
- the vehicle authentication data received by the vehicle 100 (e.g., within the AUTH1 command) is empty and/or cannot be verified; and/or
- a message has been received from the vehicle 100, wherein the message indicates that the vehicle 100 is not able to generate a digital signature using the vehicle digital key 191 (e.g., due to a defective component (notably ECU) of the vehicle 100).

In addition, the method 300 comprises, in reaction to determining 303 that the vehicle 100 cannot be authenticated at the device 110, limiting 304 the control to a restricted set of vehicle functions 103. The restricted set of vehicle functions 103 typically comprises at least one vehicle function 103 from the full set of vehicle functions 103. Furthermore, the restricted set of vehicle functions 103 is typically a real subset of the full set of vehicle functions 103. In a preferred example, the restricted set of vehicle functions 103,
- comprises one or more access functions; and/or
- does not comprise any drive function.

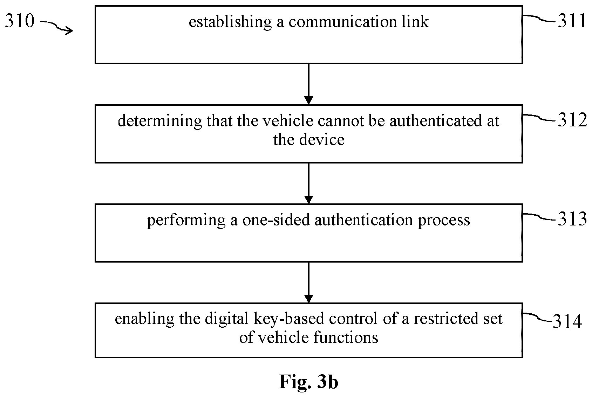

Fig. 3b shows a flow chart of an example (possibly computer-implemented) method 310 for enabling control of one or more vehicle functions 103 of a vehicle 100, wherein the vehicle 100 comprises a full set of vehicle functions 103 that can be controlled remotely by an entity using a digital key. The method 310 may be executed by the vehicle 100.

The method 310 comprises establishing 311 a communication link 132, 135 with a device 110 holding a device digital key 111 for controlling one or more vehicle functions 103 of the vehicle 100. The communication link 132, 135 may comprise a BLE and/or NFC communication link.

Furthermore, the method 310 comprises determining 312 that the vehicle 100 cannot be authenticated at the device 110. This may be determined based on the fact that
- the vehicle 100 is not able to generate the vehicle authentication data which typically comprises a digital signature that is generated using the (SK of the) vehicle digital key 191; and/or
- a message has been received from the device 110 (e.g., within the SELECT response) which indicates that the vehicle 100 cannot be authenticated at the device 110 (e.g., because the device 110 has no knowledge regarding the (PK of the) vehicle digital key 191).

The method 310 further comprises, in reaction to determining 312 that the vehicle 100 cannot be authenticated at the device 110, performing 313 a one-sided authentication process during which
- the device 110 is authenticated at the vehicle 100 using the device digital key 111 (e.g., based on device authentication data that is provided by the device 110 to the vehicle 100); and
- the vehicle 100 is not authenticated at the device 110.

In addition, the method 310 comprises, in reaction to performing 313 the one-sided authentication process, enabling 314 control (only) of a restricted set of vehicle functions 103 by the device 110. In particular, the control may be limited to the restricted set of vehicle functions 103.

As a result of this, a particularly efficient and flexible digital key-based control of a restricted set of vehicle functions 103 (notably of access-only functions) is enabled.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A device (110) holding a device digital key (111) for controlling one or more vehicle functions (103) of a vehicle (100); wherein the vehicle (100) comprises a full set of vehicle functions (103) that can be controlled by an entity having a digital key; wherein the device (110) is configured to
- generate device authentication data for authenticating the device (110) at the vehicle (100) based on the device digital key (111), in particular based on a private key of the device digital key (111);
- send the device authentication data to the vehicle (100) over a communication link (132, 135) between the device (110) and the vehicle (100);
- determine that the vehicle (100) cannot be authenticated at the device (110); and
- in reaction to determining that the vehicle (100) cannot be authenticated at the device (110), limit the control to a restricted set of vehicle functions (103); wherein
- the restricted set of vehicle functions (103) comprises at least one vehicle function (103) from the full set of vehicle functions (103); and
- the restricted set of vehicle functions (103) is a real subset of the full set of vehicle functions (103).

2. The device (110) of claim 1, wherein the device (110) is configured to inform the vehicle (100) about the fact that
- the vehicle (100) cannot be authenticated at the device (110); and/or
- the control is limited to a restricted set of vehicle functions (103).

3. The device (110) of any previous claim, wherein
- the device (110) comprises private data and confidential data;
- the private data notably comprises a key attestation (112) of the device digital key (111);
- the confidential data notably comprises an immobilizer token for a vehicle function (103) that relates to a drive operation of the vehicle (100); and
- the device (110) is configured to
- deny access of the vehicle (100) to the confidential data; and/or
- prevent the vehicle (100) from modifying the private data.

4. The device (110) of any previous claim, wherein
- the device (110) comprises a private mailbox and a confidential mailbox, which are configured to store information that relates to the device digital key (111) and/or to the control of one or more vehicle functions (103) of the vehicle (100);
- in particular, the device (100) is configured to store a key attestation (112) for the device digital key (111) in the private mailbox and/or to store an immobilizer token in the confidential mailbox, wherein the immobilizer token is required for a vehicle function (103) that relates to a drive operation of the vehicle (100); and
- the device (110) is configured to
- deny access of the vehicle (100) to information stored in the confidential mailbox; and/or
- prevent the vehicle (100) from writing information to the private mailbox and/or to the confidential mailbox.

5. The device (110) of any previous claim, wherein
- the restricted set of vehicle functions (103) comprises one or more vehicle functions (103) for accessing the vehicle (100), in particular for locking or unlocking a door of the vehicle (100), and/or for opening or closing a window of the vehicle (100); and/or
- the restricted set of vehicle functions (103) does not comprise any vehicle function (103) that relates to a drive operation of the vehicle (100).

6. The device (110) of any previous claim, wherein the device (110) is configured to
- receive a vehicle identifier from the vehicle (100);
- detect that the device (110) does not have access to a public key of a vehicle digital key (191) of the vehicle (100) that is identified by the vehicle identifier; and
- based on detecting that the device (110) does not have access to the public key of the vehicle digital key (191) of the vehicle (100), determine that the vehicle (100) cannot be authenticated at the device (110).

7. The device (110) of any previous claim, wherein the device (110) is configured to
- receive vehicle authentication data from the vehicle (100); wherein the vehicle authentication data comprises a digital signature that has been generated using a vehicle digital key (191) of the vehicle (100), notably a private key of the vehicle digital key (191) of the vehicle (100);
- determine that the digital signature cannot be verified; and
- based on determining that the digital signature cannot be verified, determine that the vehicle (100) cannot be authenticated at the device (110).

8. The device (110) of any previous claim, wherein the device (110) is configured to
- receive vehicle authentication data from the vehicle (100), which does not comprise a digital signature that has been generated by the vehicle (100); and
- based on the fact that the vehicle authentication data does not comprise a digital signature, determine that the vehicle (100) cannot be authenticated at the device (110).

9. The device (110) of any previous claim, wherein the device (110) is configured to,
- in reaction to determining that the vehicle (100) cannot be authenticated at the device (110), request a user (170) of the device (110) to authorize the authentication of the device (110) at the vehicle (100); and
- send the device authentication data to the vehicle (100), if the user (170) of the device (110) authorizes the authentication of the device (110) at the vehicle (100); and/or
- prevent the device authentication data from being sent to the vehicle (100), if the user (170) of the device (110) does not authorize the authentication of the device (110) at the vehicle (100).

10. A vehicle (100) comprising a full set of vehicle functions (103) that can be controlled remotely by an entity using a digital key; wherein the vehicle (100) is configured to
- establish a communication link (132, 135) with a device (110) holding a device digital key (111) for controlling one or more vehicle functions (103) of the vehicle (100);
- determine that the vehicle (100) cannot be authenticated at the device (110);
- in reaction to determining that the vehicle (100) cannot be authenticated at the device (110), perform a one-sided authentication process during which
- the device (110) is authenticated at the vehicle (100) using the device digital key (111), and
- the vehicle (100) is not authenticated at the device (110); and
- in reaction to performing the one-sided authentication process, limit control by the device (110) to a restricted set of vehicle functions (103).

11. The vehicle (100) of claim 10, wherein the vehicle (100) is configured to
- detect that a digital signature using a vehicle digital key (191), notably a private key of the vehicle digital key (191), cannot be generated, in particular due to a defective component of the vehicle (100); and
- based on detecting that a digital signature cannot be generated, determine that the vehicle (100) cannot be authenticated at the device (110).

12. The vehicle (100) of any of claims 10 to 11, wherein the vehicle (100) is configured to
- receive a message from the device (110); wherein the message is indicative of the fact that the device (110) does not have access to a public key of a vehicle digital key (191) of the vehicle (100); and
- determine based on the received message that the vehicle (100) cannot be authenticated at the device (110).

13. A method (300) for controlling one or more vehicle functions (103) of a vehicle (100) using a device digital key (111) of a device (110); wherein the vehicle (100) comprises a full set of vehicle functions (103) that can be controlled by an entity having a digital key; wherein the method (300) comprises,
- generating (301) device authentication data for authenticating the device (110) at the vehicle (100) based on the device digital key (111), in particular based on a private key of the device digital key (111);
- sending (302) the device authentication data to the vehicle (100) over a communication link (132, 135) between the device (110) and the vehicle (100);
- determining (303) that the vehicle (100) cannot be authenticated at the device (110); and
- in reaction to determining (303) that the vehicle (100) cannot be authenticated at the device (110), limiting (304) the control to a restricted set of vehicle functions (103); wherein
- the restricted set of vehicle functions (103) comprises at least one vehicle function (103) from the full set of vehicle functions (103); and
- the restricted set of vehicle functions (103) is a real subset of the full set of vehicle functions (103).

14. A method (310) for enabling control of one or more vehicle functions (103) of a vehicle (100); wherein the vehicle (100) comprises a full set of vehicle functions (103) that can be controlled remotely by an entity using a digital key; wherein the method (310) comprises
- establishing (311) a communication link (132, 135) with a device (110) holding a device digital key (111) for controlling one or more vehicle functions (103) of the vehicle (100);
- determining (312) that the vehicle (100) cannot be authenticated at the device (110);
- in reaction to determining (312) that the vehicle (100) cannot be authenticated at the device (110), performing (313) a one-sided authentication process during which
- the device (110) is authenticated at the vehicle (100) using the device digital key (111), and
- the vehicle (100) is not authenticated at the device (110); and
- in reaction to performing (313) the one-sided authentication process, limiting (314) control by the device (110) to a restricted set of vehicle functions (103).
